# EUROPEAN PATENT SPECIFICATION

(11) **EP 3 900 510 B1**
(45) Date of publication and mention of the grant of the patent: **04.09.2024**
(21) Application number: 19900962.2
(22) Date of filing: 06.12.2019
(51) Int. Cl.: A01B 69/04, B60K 35/00, G01C 21/20, B60K 35/10, B60K 35/22, B60K 35/28, G08G 1/01

(54) **TRAVELLING WORK MACHINE**
FAHRBARE ARBEITSMASCHINE
MACHINE DE TRAVAIL EN DÉPLACEMENT

(30) Priority: 20.12.2018 JP 2018238891
(43) Date of publication of application: 27.10.2021
(73) Proprietor: Kubota Corporation, Osaka 556-8601 (JP)
(72) Inventor: TAKASE, Shunya, Sakai-shi, Osaka 590-0823 (JP); MISAKI, Shinji, Sakai-shi, Osaka 590-0823 (JP)
(74) Representative: Müller-Boré & Partner Patentanwälte PartG mbB
(86) International application number: PCT/JP2019/047756
(87) International publication number: WO 2020/129684

(56) References cited:
- EP-A1- 3 351 077
- JP-A- 2004 154 012
- JP-A- 2004 154 012
- JP-A- 2017 123 803
- JP-A- 2017 123 803
- JP-A- 2018 148 857
- JP-A- 2018 148 858
- JP-A- 2018 180 922
- JP-A- 2018 180 922

## Description

### Technical Field

The present invention relates to a traveling work machine in which a target heading can be calculated on the basis of a travel trajectory and maneuvering of a machine body can be controlled to follow the target heading.

### Background Art

A work vehicle disclosed in JP 2018-148858A, for example, includes a position detection unit ("receiving device" in the document) capable of obtaining position information pertaining to a machine body using a satellite positioning system, and a maneuvering control unit ("automatic maneuvering control unit" in the document) capable of performing maneuvering control such that the machine body follows a target heading on the basis of the position information obtained by the position detection unit. The target heading, which serves as a reference for automatic maneuvering control, is set on the basis of a position when an operating tool for registering a start point ("start point registration switch" in the document) is operated and a position when an operating tool for registering an end point ("end point registration switch" in the document) is operated.

### Prior Art Documents

Document JP 2018/180922 A describes a work vehicle including a traveling vehicle body, a steering member for steering the traveling vehicle body, a position information acquiring device for acquiring position coordinates of the traveling vehicle body, an automatic straight traveling device for activating the steering member to move the traveling vehicle body straight ahead, a reference position acquiring member for acquiring traveling reference data serving as a reference for straight traveling of the traveling vehicle body, and a control device for controlling individual parts. Detection means for detecting a traveling state set as a state other than the straight traveling of the traveling vehicle body is provided, and the control device deletes the traveling reference data when the traveling state is detected by the detection means.

Document JP 2017/123803 A describes an agricultural implement comprising: a traveling airframe capable of changing an automatic run by a manual steering and an automatic run for running by an automatic steering along a set running line set in parallel with a reference running line, a change-over switch capable of switching a manual run and an automatic run, and a starting point setting part for setting the plane position of the traveling airframe at the time point, when the change-over is performed by the change-over switch from the manual run to the automatic run, is set as a starting point of the set running line.

Document JP 2004 154012 A describes a work vehicle equipped with a direction controlling means receiving and deciphering information about the position and time transmitted from the plurality of GPS satellites and correcting the traveling direction of the machine body based on the deciphered information about the position and time. The traveling controller is composed as follows. The work vehicle is previously subjected to teaching traveling. Thereby, the target traveling direction of the work vehicle is determined from the information about the position and time of the working vehicle obtained by an independent positioning method of the GPS. Traveling control is performed with the direction controlling means toward the target traveling direction during the automatic traveling of the work vehicle carried out subsequently to the teaching traveling.
Document EP 3 351 077 A1 describes a travel route generation device for a work vehicle working in a boundary-divided work field including: a starting point registration unit that position-registers a first endpoint on a boundary side of an entrance passage as a starting point; an intermediate point registration unit that position-registers shape feature points prescribing a work field shape as intermediate points; an end point registration unit that position-registers a second endpoint facing the first endpoint on a boundary side of the entrance passage as an end point; a basic shape calculation unit calculating a work field basic shape by connecting the starting point, intermediate points, and end point; and an entrance passage information generation unit that generates entrance passage information with a quadrangle as an entrance passage shape, the quadrangle having the starting point and end point as opposite vertices.Disclosure of the Invention Problems the Invention is to Solve

According to the work vehicle disclosed in JP 2018-148858A, the start point and the end point are each registered using a separate dedicated operating tool. According to this configuration, when registering the start point and the end point, there is a risk of an occupant pressing the wrong operating tool, and in such a case, the operations for registering the start point and the end point are a burden for the occupant. If the operating tools serve as means for performing operations aside from setting the start point and the end point as well, the number of operating tools can be reduced, which is advantageous in terms of costs.

An object of the present invention is to provide a traveling work machine in which a start point and an end point can be set through simple operations when calculating a target heading.

### Means to Solve the Problems

The claimed invention is defined by the features set forth in the appended independent claim. Additional embodiments are defined by the dependent claims.

According to the present invention, both the start point and the end point can be set using a single operating tool. Accordingly, when registering the start point and the end point, the risk that an occupant will press the wrong operating tool is reduced, and the operations for registering the start point and the end point are easier, than when using a configuration in which separate operating tools are provided. Furthermore, using the single operating tool as a plurality of operating means reduces the number of operating tools and is therefore advantageous in terms of costs. This makes it possible to realize a traveling work machine in which a start point and an end point can be set through simple operations when calculating a target heading.

Moreover, according to the claimed invention, the machine body will always travel after the start point has been set, and the end point can be set in a different position from the start point. Furthermore, according to this configuration, the distance between the start point and the end point is at least a pre-set distance, and thus the target heading can be calculated with at least a predetermined accuracy.

Furthermore, according to the claimed invention, even if the occupant does not know how to set the target heading, they can set the start point and the end point while checking information displayed in the display unit. This makes it even easier to set the start point and the end point when calculating the target heading.

In the present invention, preferably, the target heading calculation unit is configured to be capable of setting the start point through an operation of the operating tool when an accuracy at which the position detection unit obtains the position information is at least a pre-set accuracy.

If the accuracy of the position information is poor when setting the start point and the end point, there is a risk that an accurate target heading cannot be calculated. According to this configuration, the start point cannot be set when the accuracy of the position information is poor, which averts the risk of maneuvering control being performed on the basis of an erroneous target heading.

In the present invention, preferably, the traveling work machine includes a maneuvering operation detection means that detects a maneuvering operation of the machine body, and when, after the start point has been set through an operation of the operating tool, a change amount of the maneuvering operation is detected as exceeding a pre-set range without the operating tool being operated, the setting of the start point is canceled.

When the travel trajectory is a turning state, the target heading cannot be calculated so as to follow the travel trajectory, and there is thus a risk that maneuvering control cannot be performed according to the occupant's intentions. According to this configuration, turning of the machine body can be determined on the basis of a change amount of the maneuvering operation, which averts a situation in which the start point and the end point are set in a state where the travel trajectory is turning.

In the present invention, preferably, the traveling work machine includes a cabin part occupied by an occupant, and a maneuvering tool which is supported by a support member in the cabin part and which is capable of performing a maneuvering operation of the travel apparatus, with the operating tool being disposed above the support member and directly below the maneuvering tool.

According to this configuration, the support member that supports the maneuvering tool also serves as a support member for the operating tool, and the operating tool can therefore be supported using a simple support configuration. This also makes it easy for the occupant to operate the operating tool while operating the maneuvering tool, making the operation for registering the start point and the end point even easier.

### Brief Description of the Drawings

FIG. 1 is a side view of a tractor serving as a traveling work machine.
FIG. 2 is a diagram illustrating types of panels in a front part of the interior of an operator cab.
FIG. 3 is a function block diagram illustrating functions for automatic maneuvering control and the flow of data.
FIG. 4 is a plan view of a field, schematically illustrating a travel route in tilling work performed by the tractor.
FIG. 5 is a flowchart illustrating processing for generating a reference route.
FIG. 6 is a descriptive diagram illustrating guidance information when generating the reference route.
FIG. 7 is a flowchart illustrating processing for displaying the guidance information at the time of turning travel.
FIG. 8 is a descriptive diagram illustrating the guidance information at the time of turning travel.
FIG. 9 is a descriptive diagram illustrating the guidance information at the time of turning travel.
FIG. 10 is a descriptive diagram illustrating the guidance information at the time of turning travel.
FIG. 11 is a descriptive diagram illustrating the guidance information at the time of turning travel.
FIG. 12 is a flowchart illustrating processing for displaying the guidance information before the start of automatic maneuvering control.
FIG. 13 is a descriptive diagram illustrating the guidance information before the start of automatic maneuvering control.

### Best Mode for Carrying out the Invention

### Basic Configuration of Traveling Work Machine

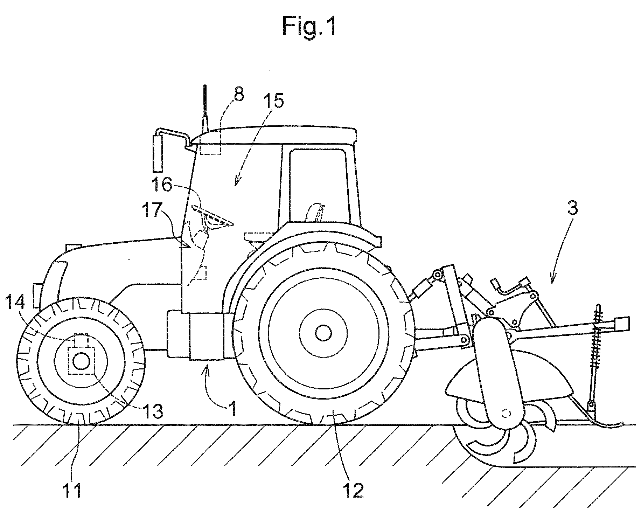

One embodiment of a traveling work machine according to the present invention will be described. FIG. 1 is a side view of a tractor serving as an example of the traveling work machine. In this tractor, a cabin part 15 is provided in a central part of a machine body 1, which is supported by front wheels 11 and rear wheels 12 serving as a travel apparatus. A rotary tilling device 3, which serves as a working device, is attached to a rear part of the machine body 1 via a hydraulic raising/lowering mechanism. The front wheels 11 function as maneuvering wheels, and a travel direction of the tractor is changed by changing a steering angle thereof. The steering angle of the front wheels 11 is changed by operating a steering mechanism 13. A steering motor 14 for automatic maneuvering control is included in the steering mechanism 13. A panel assembly 17 is provided in a front part of the interior of the cabin part 15, and a steering wheel 16 serving as a maneuvering tool is disposed adjacent to the rear of the panel assembly 17. Although not described in detail, a recessed area is provided at a central location, in the horizontal direction, in a rear part of the panel assembly 17, and the recessed area is recessed further into the front of the machine body than left and right side parts of the panel assembly 17. The steering wheel 16 is supported by a steering post 22 that serves as a support member, and a front part of the steering post 22 with respect to the machine body is located in the recessed area. During manual travel, maneuvering operations of the front wheels 11 are performed by a human operating the steering wheel 16.

In the present invention, "maneuvering operations" includes changing the direction of the machine body 1 by changing the direction of the front wheels 11, but if the travel apparatus is a crawler type, changing the direction of the machine body 1 using a speed difference between left and right crawlers is included in the "maneuvering operations".

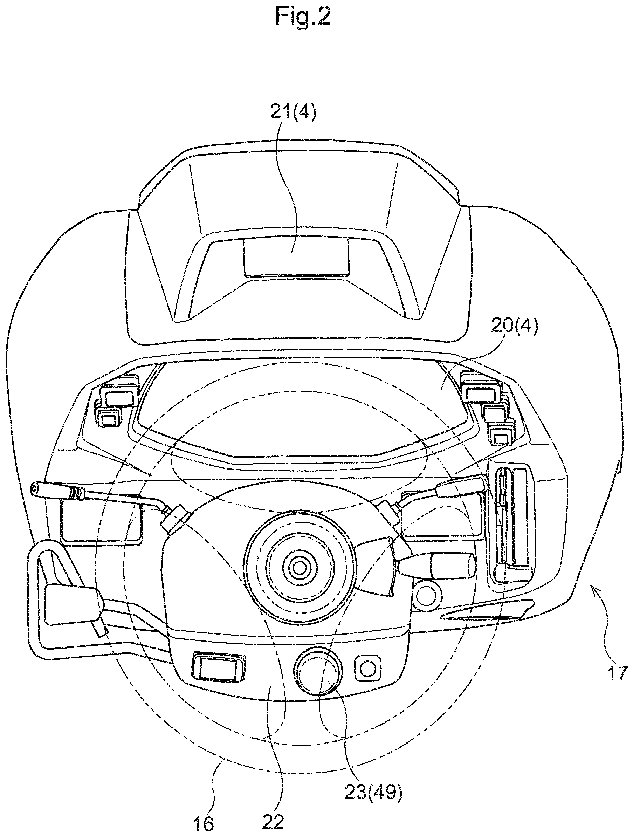

As illustrated in FIG. 2, a meter panel 20 and a side panel 21 are arranged vertically in the panel assembly 17, and the side panel 21 is disposed higher than the meter panel 20. Information pertaining to the driving of the machine body 1, such as an engine speed, a remaining fuel amount, and so on, is displayed in the meter panel 20. Guidance information for automatic maneuvering control, which will be described later, is displayed in the side panel 21. The meter panel 20 and the side panel 21 are configured as part of a display unit 4 in terms of a configuration for the automatic maneuvering control.

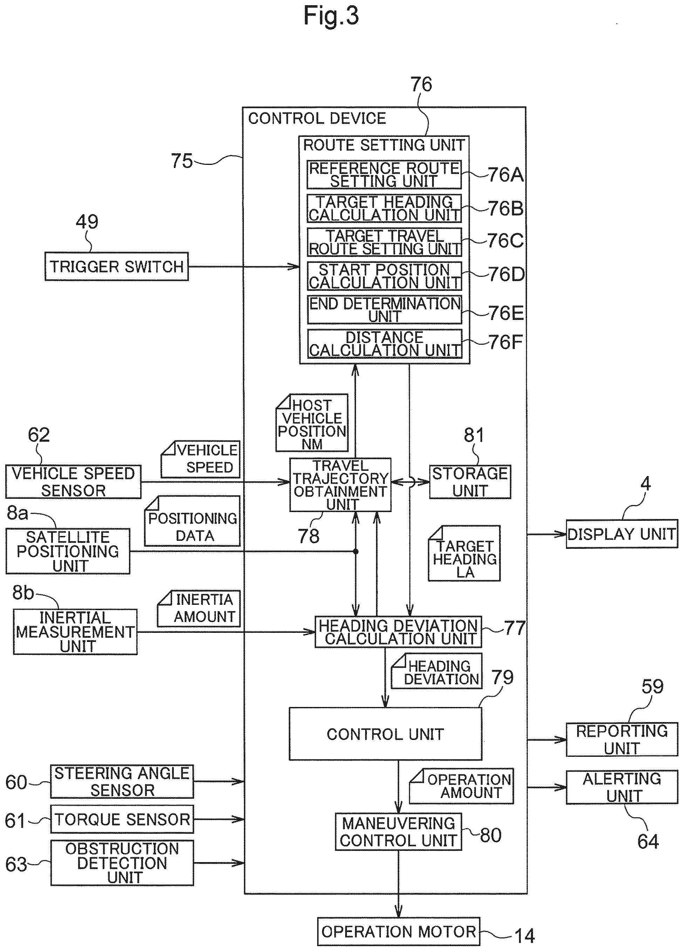

A dial switch 23 is disposed on an upper surface of the steering post 22. The side panel 21 can be operated by using the dial switch 23 as an operating tool, and the dial switch 23 is disposed in an upper part of the steering post 22 and directly below the steering wheel 16. The dial switch 23 is configured to be freely rotatable about an axis extending in the up-down direction (or a direction inclined rearward in a front-back direction of the machine body), and an occupant can switch items of the guidance information displayed in the side panel 21 by rotating the dial switch 23. Additionally, the dial switch 23 can be pressed in a downward direction (or a direction inclined forward in the front-back direction of the machine body). By pressing the dial switch 23, the occupant can perform an operation for accepting a setting item, a selected item, or the like pertaining to the guidance information displayed in the side panel 21. This dial switch 23 is also used as a trigger switch 49, which will be described later on the basis of FIG. 3 and the like, and is operated as the trigger switch 49 by the occupant pressing the dial switch 23. The dial switch 23 will be called the "trigger switch 49" hereinafter.

### Configuration for Automatic Maneuvering Control

A configuration for performing automatic maneuvering control will be described next. As illustrated in FIG. 3, a control device 75 constituted by a large number of electronic control units (called "ECUs") is provided in the machine body 1. The control device 75 is configured to be capable of switching a control mode to an automatic maneuvering mode in which automatic maneuvering control is executed, and a manual maneuvering mode in which automatic maneuvering control is not executed.

The machine body 1 is provided with a satellite positioning unit 8a, which measures the position of the machine body 1 using GPS (Global Positioning System), which is a well-known technology, as an example of a satellite positioning system (GNSS, or Global Navigation Satellite System) which detects the position of the machine body 1 by receiving radio waves from a satellite. Although the satellite positioning unit 8a uses DGPS (Differential GPS, a relative positioning method) in the present embodiment, it is also possible to use RTK-GPS (Real-Time Kinematic GPS, an interference-based positioning method).

Specifically, the satellite positioning unit 8a, which partially constitutes a position detection unit 8, is provided in the machine body 1, which is the subject of positioning. The satellite positioning unit 8a uses an antenna to receive radio waves emitted from a plurality of GPS satellites orbiting the earth. The position of the satellite positioning unit 8a is measured on the basis of information in the radio waves received from navigation satellites.

In addition to the satellite positioning unit 8a, the machine body 1 is provided with an inertial measurement unit 8b having, for example, an IMU (Inertial Measurement Unit), as a heading detection means that detects a heading of the machine body 1. The inertial measurement unit 8b may be configured including a triaxial gyrosensor, a triaxial accelerometer, or the like. Although not illustrated, the inertial measurement unit 8b is provided in a low location at the center of the machine body 1 in a horizontal width direction, for example. The inertial measurement unit 8b can detect an angular velocity of a turning angle of the machine body 1, and can calculate a change in the azimuth of the machine body 1 by integrating the angular velocity. Accordingly, heading information of the machine body 1 is included in measurement information measured by the inertial measurement unit 8b. Although not described in detail, in addition to the angular velocity of the turning angle of the machine body 1, the inertial measurement unit 8b can also measure an angular velocity of a left-right tilt angle of the machine body 1, a front-back tilt angle of the machine body 1, and the like.

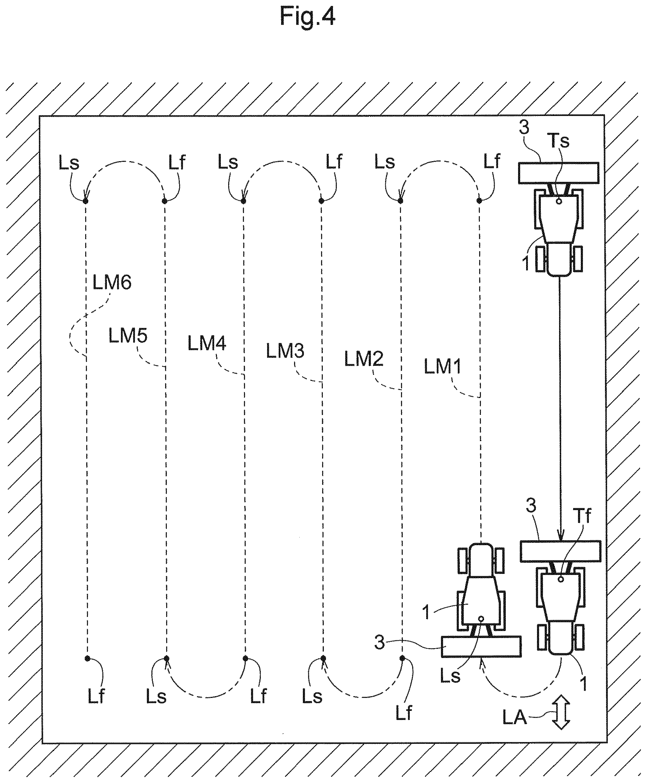

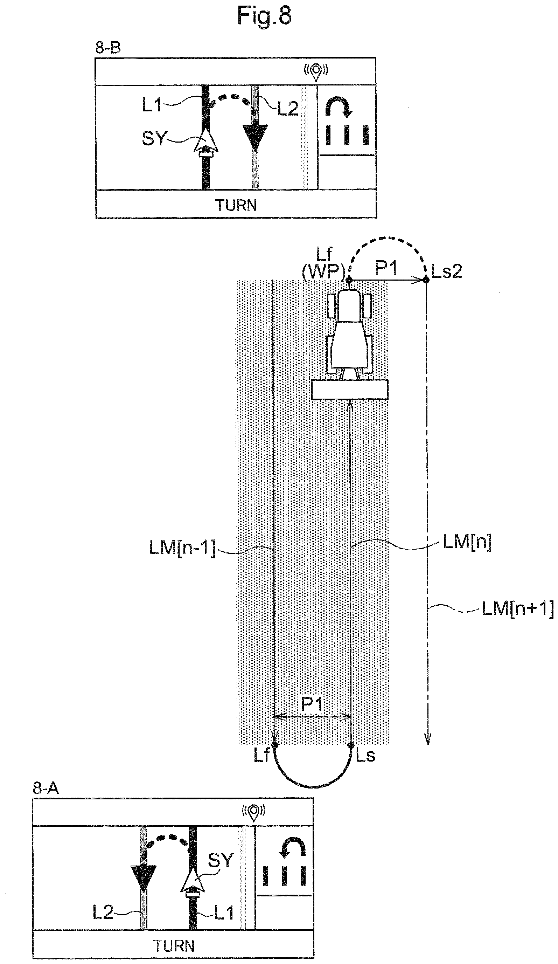

The control device 75 includes a route setting unit 76, a heading deviation calculation unit 77, a travel trajectory obtainment unit 78, a control unit 79, and a maneuvering control unit 80. The route setting unit 76 sets a target travel route LM along which the machine body 1 is to travel (see FIG. 4, FIG. 8, and the like). The heading deviation calculation unit 77 is configured to be capable of calculating an angular deviation between a travel heading of the machine body 1 and a target heading LA, i.e., a heading deviation. On the basis of information of the heading deviation, the control unit 79 calculates and outputs an operation amount such that the machine body 1 travels along the target travel route LM. Besides the information of the heading deviation, the control unit 79 can calculate and output the operation amount on the basis of the position information of the machine body 1 measured by the satellite positioning unit 8a and the heading information of the machine body 1 measured by the inertial measurement unit 8b. The maneuvering control unit 80 controls the steering motor 14 on the basis of the operation amount. Note that the control unit 79 and the maneuvering control unit 80 may be configured in an integrated manner.

The trigger switch 49 is provided as an operating tool for setting the target travel route LM used in the automatic maneuvering control (see FIG. 4, FIG. 8, and the like) and starting the automatic maneuvering control. Although details will be given later, the target travel route LM is set on the basis of the target heading LA (see FIG. 4), and the target heading LA is calculated on the basis of a travel trajectory along which the machine body 1 has traveled in the field in advance. A start position Ts (see FIG. 4) and an end position Tf (see FIG. 4) are set by operating the trigger switch 49 in travel performed to obtain the travel trajectory. Note that the trigger switch 49 need not be constituted by a single switch, and may instead be configured such that a switch for setting the start position Ts and a switch for setting the end position Tf are arranged side-by-side.

Information from the satellite positioning unit 8a, the inertial measurement unit 8b, the trigger switch 49 serving as an operating tool, a steering angle sensor 60 serving as a maneuvering operation detection means, a torque sensor 61, a vehicle speed sensor 62, an obstruction detection unit 63, and the like is input to the control device 75. The vehicle speed sensor 62 is configured to be capable of detecting the vehicle speed from the rotational speed of a transmission shaft in a transmission mechanism for the rear wheels 12. Note that the vehicle speed may be detected not only by the vehicle speed sensor 62, but also using a positioning signal of the satellite positioning unit 8a. The obstruction detection unit 63 is provided on both a front part and left and right side parts of the machine body 1, and is configured to be capable of detecting a ridge of the field, metal poles in the field, and so on using an electro-optical rangefinding sensor, an image sensor, or the like, for example. When an obstruction is detected by the obstruction detection unit 63, an alert is issued to the occupant using an alerting unit 64, which uses a buzzer, audio guidance, or the like, for example. The control device 75 is also connected to a reporting unit 59, and the reporting unit 59 is configured to report on states such as the vehicle speed, the engine speed, and the like, for example. The reporting unit 59 is configured to be displayed in the display unit 4, for example. Furthermore, the alerting unit 64 may be configured to display the alert in the display unit 4 via the reporting unit 59. In this case, an alert that a ridge has been detected, for example, is displayed in the display unit 4. The alerting unit 64 may also be configured as part of the reporting unit 59. The display unit 4 is configured to be capable of displaying, in a screen, a variety of information based on signal inputs from the reporting unit 59, the alerting unit 64, and the like. The display unit 4 is also configured to be capable of displaying various types of guidance information according to conditions of straight travel, conditions of turning travel, and the like of the machine body 1.

The heading deviation calculation unit 77 calculates an angular deviation between a detected heading of the machine body 1, detected by the satellite positioning unit 8a and the inertial measurement unit 8b, and a target heading LAin the target travel route LM, i.e., calculates the heading deviation. Then, when the control device 75 is set to the automatic maneuvering mode, the control unit 79 calculates and outputs an operation amount for controlling the steering motor 14 so as to reduce the angular deviation. In this manner, the maneuvering control unit 80 is configured to be capable of controlling the maneuvering of the machine body 1 so as to follow the target heading LA.

The travel trajectory obtainment unit 78 calculates a position of the machine body 1, i.e., a host vehicle position NM, on the basis of the positioning signal measured by the satellite positioning unit 8a, the heading of the machine body 1 calculated by the heading deviation calculation unit 77, and the vehicle speed detected by the vehicle speed sensor 62. A storage unit 81 is configured to be capable of storing the host vehicle position NM as position information. The travel trajectory obtainment unit 78 stores the host vehicle position NM in the storage unit 81, which is constituted by RAM (Random Access Memory), for example, as time passes. The travel trajectory obtainment unit 78 is also configured to be capable of obtaining a travel trajectory on the basis of an aggregation of host vehicle positions NM stored in the storage unit 81. In sum, the travel trajectory obtainment unit 78 is configured to be capable of obtaining the travel trajectory of the machine body 1 on the basis of the detection, over time, of the host vehicle position NM serving as position information.

The operation amount is calculated by the control unit 79 on the basis of information on the heading deviation. The maneuvering control unit 80 executes the automatic maneuvering control on the basis of the operation amount calculated by the control unit 79 during the automatic maneuvering control of the machine body 1. In other words, the steering motor 14 is operated such that the detection position of the machine body 1 as detected by the satellite positioning unit 8a and the inertial measurement unit 8b (the host vehicle position NM) is located on the target travel route LM.

In the present embodiment, the control signal may be the operation amount output by the control unit 79, or may be a voltage value, a current value, or the like with which the maneuvering control unit 80 operates the steering motor 14.

A reference route setting unit 76A, a target heading calculation unit 76B, and a target travel route setting unit 76C are included in the route setting unit 76. As illustrated in FIG. 3, a reference route corresponding to a target route for automatic maneuvering is set by the reference route setting unit 76A through reference route setting processing based on operations of the trigger switch 49. The target heading calculation unit 76B calculates the target heading LA on the basis of a heading aligned with a lengthwise direction of the reference route. The target travel route setting unit 76C is configured to be capable of generating the target travel route LM following the target heading LA, using the reference route and the target heading LA as a reference. To generate the target travel route LM, a start position calculation unit 76D, an end determination unit 76E, and a distance calculation unit 76F are included in the route setting unit 76. The start position calculation unit 76D, the end determination unit 76E, and the distance calculation unit 76F will be described later. Note that the reference route setting unit 76A and the target heading calculation unit 76B may be configured in an integrated manner.

### Target Travel Route

FIG. 4 schematically illustrates an example of tilling work performed by the tractor. In this tilling work, work travel, in which the tractor moves forward along a linear work route while performing actual tilling work, and turning travel, in which the tractor turns to move to the next linear work route, are alternately and repeatedly performed multiple times. At this time, the first linear work route is a reference route which is steered manually, and the following linear routes are set in sequence by the route setting unit 76 so as to be arranged side-by-side along the reference route. These routes correspond to the target travel route LM for automatic maneuvering control, and a plurality of target travel routes LM1 to LM6 are indicated in FIG. 4. Work travel involving automatic maneuvering control is performed in each of the target travel routes LM1 to LM6. When traveling between each of the target travel routes LM1 to LM6, the machine body 1 moves from an end position Lf of the work travel to a start position Ls of the next work travel in an unworked part of the field while reversing in the opposite direction from the travel direction of the work travel.

First, the reference route is generated. The occupant manually moves the machine body 1 to a ridge at one corner within the field. When the machine body 1 reaches the ridge at the corner, the occupant operates the trigger switch 49. The position at the time when the occupant operates the trigger switch 49 is registered as the start position Ts by the reference route setting unit 76A. After the registration of the start position Ts, the occupant performs manual operations to move the machine body 1 straight (or substantially straight) from the start position Ts along the ridge on one side of the field. During this period, the host vehicle position NM is calculated by the travel trajectory obtainment unit 78 as time passes and is stored in the storage unit 81. Then, after the machine body 1 has moved straight (or substantially straight) from one end to the other end of the ridge on the one side, the occupant stops the machine body 1 and operates the trigger switch 49 again. The position at the time when the occupant operates the trigger switch 49 again is registered as the end position Tf by the reference route setting unit 76A. The travel trajectory obtainment unit 78 obtains the travel trajectory on the basis of an aggregate of the host vehicle positions NM between the start position Ts and the end position Tf, and the reference route setting unit 76A calculates the reference route between the start position Ts and the end position Tf on the basis of that travel trajectory. When the machine body 1 travels along the target travel route LM, the direction which follows the reference route becomes the target heading LA.

Note that the travel of the machine body 1 from the start position Ts to the end position Tf may be work travel involving tilling work, or may be travel in a non-work state. When positional coordinates of the reference route are set, automatic maneuvering control can be performed in at least part of the reference route.

After the setting of the reference route is complete, the occupant moves the machine body 1 to the start position Ls in a target region for the first work travel in the field. In the embodiment illustrated in FIG. 4, the target region for the first work travel is adjacent to the reference route, and thus the occupant performs turning travel for reversing the travel direction of the machine body 1 by 180 degrees in order to move the machine body 1 to the start position Ls. At this time, the control unit 79 can determine that the machine body 1 has turned due to the heading of the machine body 1 being reversed. The heading of the machine body 1 reversing can be detected by the satellite positioning unit 8a, the inertial measurement unit 8b, or the like. Aside from the heading of the machine body 1 reversing, the turning of the machine body 1 may be determined by operations of various devices. As the operations of various devices, for example, a PTO shaft clutch may be configured to be manipulated in and out. Additionally, the machine body 1 reaching the start position Ls may be determined by the satellite positioning unit 8a.

After this turning travel is complete, the manual maneuvering mode of the control device 75 is continued, and the occupant causes the machine body 1 to travel along the target heading LA through manual operations. During this period, the control device 75 confirms determination conditions for the heading deviation of the machine body 1 calculated by the heading deviation calculation unit 77, the direction of the front wheels 11, the steering angle of the steering wheel 16, and the like, and determines whether or not the state of the machine body 1 is a state suitable for the next tilling work. Whether or not the state of the machine body 1 is suitable for tilling work is determined, for example, using a position distanced from the pre-turning travel position by an integral multiple of a work width in a direction orthogonal to the target heading LA as a reference position, and is determined on the basis of whether or not travel misalignment with respect to the reference position in the left-right direction of the machine body 1 is within a permissible range. If the travel misalignment is outside of the permissible range, the occupant manually steers the machine body 1 so that the travel misalignment of the machine body 1 enters the permissible range.

The heading deviation of the machine body 1 with respect to the target heading LA being significantly high, the steering wheel 16 being repeatedly steered to the left and right so that the position of the steering wheel 16 fails to stabilize, the vehicle speed of the machine body 1 being too fast or too slow, and so on can be given as examples of states not suitable for tilling work. The detection accuracy of the position detection unit 8 being lower than a pre-set threshold can also be given as an example of a state not suitable for tilling work.

When the control device 75 determines that the state of the machine body 1 is a state suitable for the next tilling work, the automatic maneuvering control can be performed by operating the trigger switch 49. In other words, the target travel route LM1 is set by the target travel route setting unit 76C, and the work travel is started, in response to the occupant operating the trigger switch 49. When the work travel is started, the automatic maneuvering control is performed so that the machine body 1 travels along the target travel route LM1. The target travel route LM1 is a target travel route LM which is set to a heading that follows the target heading LA, and in which the machine body 1 performs the first work travel after the setting of the reference route. While the automatic maneuvering control is performed, automatic steering is performed through operations by the steering mechanism 13, and the vehicle speed of the machine body 1 is also automatically adjusted. Note, however, that the configuration may be such that the vehicle speed of the machine body 1 can be adjusted through human operations made by the occupant even while automatic maneuvering control is being performed.

When the automatic maneuvering control performed along the target travel route LM1 ends, the occupant continues manual steering until, through the above-described turning travel, the state of the machine body 1 becomes a state suitable for the next tilling work. If the trigger switch 49 is permitted to be operated, the occupant operates the trigger switch 49, and the target travel route setting unit 76C sets the target travel route LM2 for the next time to a heading following the target heading LA. Then, the automatic maneuvering control is performed so that the machine body 1 travels along the target travel route LM2. Thereafter, the turning travel, the setting of the target travel route LM, and the work travel are repeated through the above-described process, in order of the target travel routes LM3, LM4, LM5, and LM6.

### Display of Guidance Information Pertaining to Reference Route Generation

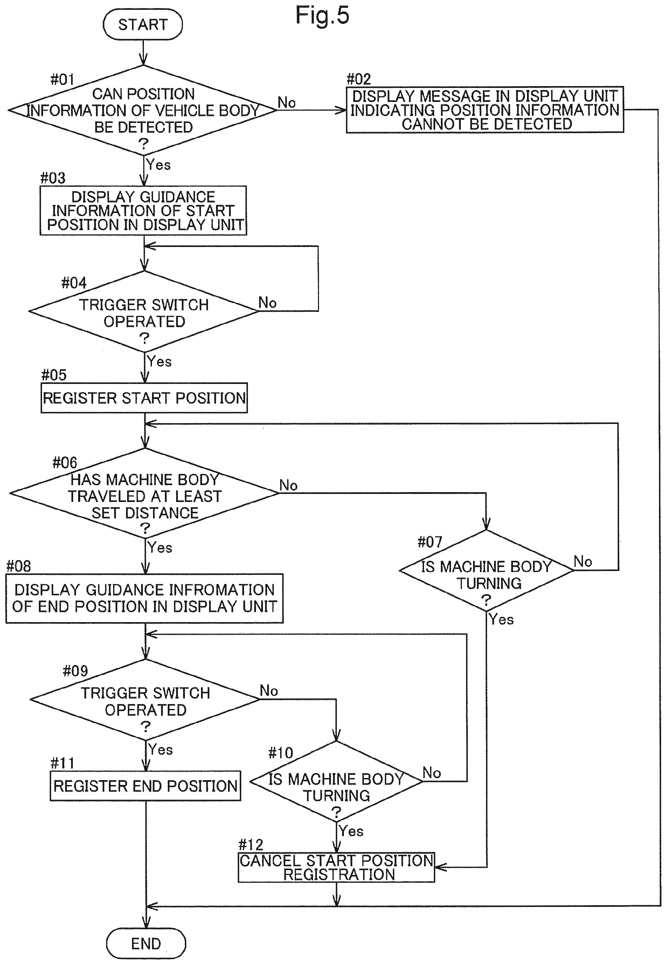

The display of guidance information pertaining to reference route generation will be described on the basis of FIG. 3, FIG. 5, and FIG. 6. The reference route setting unit 76A generates the reference route on the basis of the flowchart illustrated in FIG. 5. Before the generation of the reference route, the route setting unit 76 determines whether or not the position information of the machine body 1 can be detected by the position detection unit 8 (step #01). If the position information of the machine body 1 is not detected (step #01: No), a message indicating that the detection is not possible is displayed in the display unit 4 (step #02), and the reference route is not generated. In this manner, when the accuracy of the obtainment of the position information by the position detection unit 8 is at least a pre-set accuracy, the reference route setting unit 76A can set the start position Ts through an operation of the trigger switch 49, which serves as an operating tool.

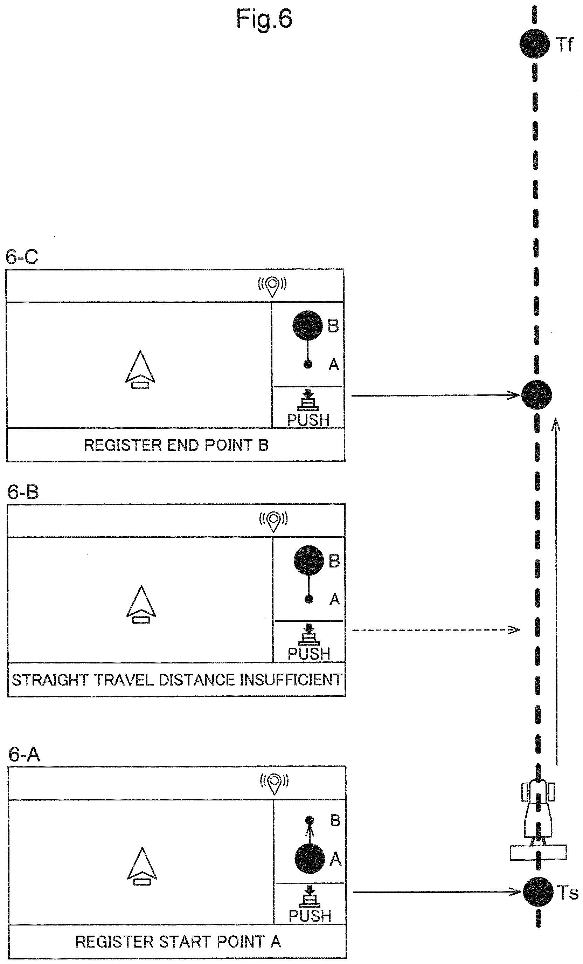

If the position information of the machine body 1 is detected (step #01: Yes), guidance information for the start position Ts, such as that indicated by 6-Ain FIG. 6, is displayed in the display unit 4 (step #03), and the start position Ts can be registered. The guidance information indicated by 6-A, 6-B, and 6-C in FIG. 6 are displayed in the side panel 21 illustrated in FIG. 2. Note, however, that the guidance information may be displayed in the meter panel 20 illustrated in FIG. 2. In the guidance information for the start position Ts indicated by 6-Ain FIG. 6, the start position Ts is displayed as "start point A". A state where the guidance information for the start position Ts is displayed in the display unit 4 is a standby state for an operation of the trigger switch 49 (step #04). When the trigger switch 49 is operated (step #04: Yes), the reference route setting unit 76A registers the start position Ts (the start point A) (step #05).

After the registration of the start position Ts, the occupant moves the machine body 1 forward through manual operations. Then, the reference route setting unit 76A determines whether or not the machine body 1 has traveled at least a pre-set distance by calculating the distance between the start position Ts and the host vehicle positions NM as time passes (step #06). If the travel distance of the machine body 1 has not reached the set distance (step #06: No), guidance information indicating that the travel distance has not reached the set distance is displayed in the display unit 4, even if the occupant operates the trigger switch 49. As the guidance information indicating that the travel distance has not reached the set distance, for example, a message reading "insufficient forward travel distance" is displayed, as indicated by 6-B in FIG. 6. In this manner, the reference route setting unit 76A can, through an operation of the trigger switch 49, set the end position Tf (an end point B) after the start position Ts (the start point A) has been set by the trigger switch 49 being operated as an operating tool and after the machine body 1 has traveled a pre-set distance following the setting of the start position Ts.

While the machine body 1 is moving forward as a result of the manual operations, the reference route setting unit 76A determines whether or not the machine body 1 is turning (step #07). A change amount in the maneuvering operations based on operation of the steering wheel 16 is detected by the steering angle sensor 60. The configuration is such that the turning of the machine body 1 can be determined by detecting that the change amount in the maneuvering operations based on the detection by the steering angle sensor 60 has exceeded a pre-set range. Additionally, the heading deviation calculation unit 77 can calculate a turning heading of the machine body 1 on the basis of a positioning signal from the satellite positioning unit 8a, an inertia signal from the inertial measurement unit 8b, or the like. Then, when the reference route setting unit 76A determines that the machine body 1 is turning (step #07: Yes), the registration of the start position Ts is canceled and the generation of the reference route is aborted (step #12). At this time, guidance information indicating that the generation of the reference route has been aborted, e.g., a message reading "a turn has been detected and the generation of the reference route will end. Please generate the reference route again", is displayed in the display unit 4. In this manner, when, after the start position Ts (the start point A) has been set by operating the trigger switch 49 as an operating tool, the change amount in the maneuvering operations is detected as having exceeded a pre-set without the trigger switch 49 being operated, the setting of the start position Ts is canceled.

If the travel distance of the machine body 1 has reached the set distance (step #06: Yes), guidance information for the end position Tf, such as that indicated by 6-C in FIG. 6, is displayed in the display unit 4 (step #08), and the end position Tf can then be registered. In the guidance information for the end position Tf indicated by 6-C in FIG. 6, the end position Tf is displayed as the "end point B". A state where the guidance information for the end position Tf is displayed in the display unit 4 is a standby state for an operation of the trigger switch 49 (step #09). In this manner, when the end position Tf (the end point B) can be set by operating the trigger switch 49 as an operating tool, the display unit 4 displays an indication that the end position Tf can be set.

When the trigger switch 49 is operated (step #09: Yes), the reference route setting unit 76A registers the end position Tf (step #11). The reference route is generated, and the target heading LA is calculated, through the foregoing steps. In this manner, the reference route setting unit 76A sets the reference route on the basis of the travel trajectory of the machine body 1. Additionally, the trigger switch 49 serving as the operating tool is configured to be capable of setting both the start position Ts (the start point A) and the end position Tf (the end point B) when setting the reference route.

While waiting for the trigger switch 49 to be operated (step #09: No), the reference route setting unit 76A determines whether or not the machine body 1 is turning through the same method as in step #07 (step #11). When it is determined that the machine body 1 is turning (step #11: Yes), as described above, the registration of the start position Ts is canceled and the generation of the reference route is aborted (step #12), and guidance information indicating that the generation of the reference route has been aborted is displayed in the display unit 4.

### Display of Guidance Information in Turning Travel

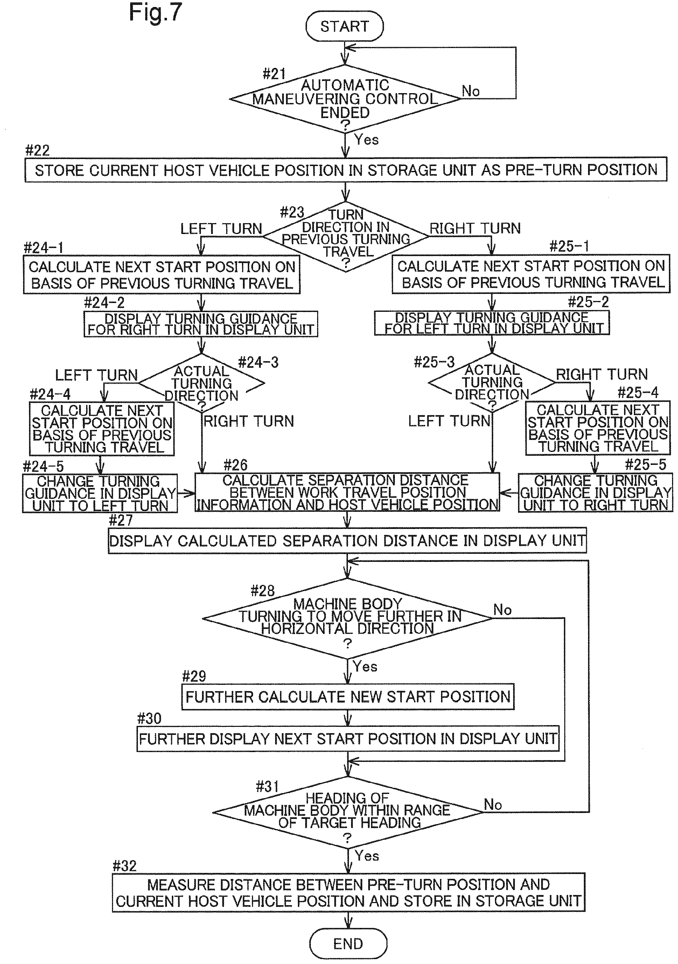

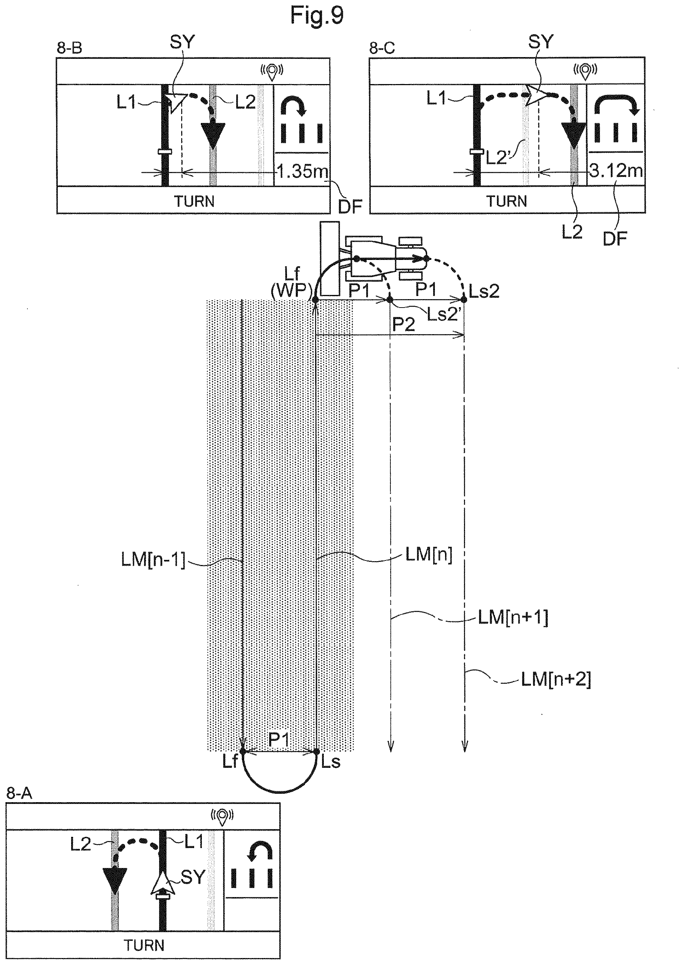

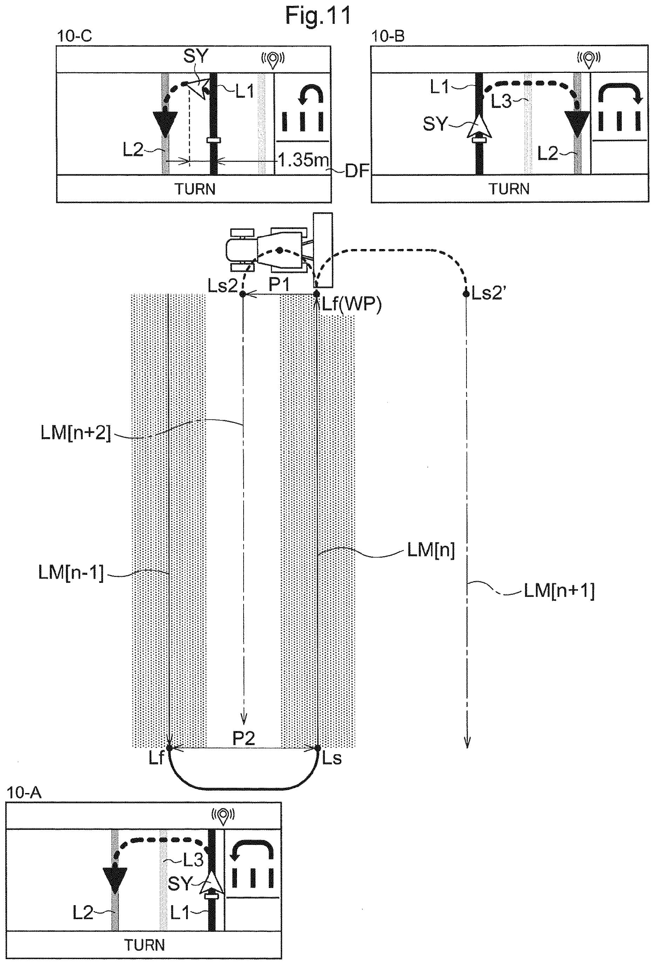

The display of guidance information in turning travel will be described on the basis of FIG. 7 and FIG. 11. As illustrated in FIG. 8, when turning travel is performed after the completion of automatic maneuvering control along the target travel route LM, guidance information pertaining to the turning travel is displayed in the display unit 4. The guidance information for a left turn, indicated by 8-Ain FIG. 8 and FIG. 9, is displayed in the display unit 4 after automatic travel control along the target travel route LM[n-1] has been performed. Additionally, the guidance information for a right turn, indicated by 8-B in FIG. 8 and FIG. 9, is displayed in the display unit 4 after automatic travel control along the target travel route LM[n] has been performed. A map screen showing the machine body 1 and the surroundings of the machine body 1 is included in this guidance information. Additionally, although this guidance information is displayed in the side panel 21 illustrated in FIG. 2, the guidance information may be displayed in the meter panel 20 illustrated in the same drawing.

As illustrated in FIG. 3, the start position calculation unit 76D, the end determination unit 76E, and the distance calculation unit 76F are included in the route setting unit 76. FIG. 7 illustrates a flowchart pertaining to the display of the guidance information pertaining to the turning travel, and processing based on this flowchart is performed by the control device 75.

The end determination unit 76E determines whether or not the automatic maneuvering control for traveling along the target travel route LM has ended (step #21). The end of the automatic maneuvering control is determined, for example, on the basis of whether or not a PTO clutch lever (not shown), a pumper lever (not shown), or the like has been operated. When the end determination unit 76E determines that the automatic maneuvering control has ended (step #21: Yes), the host vehicle position NM at the point in time of the determination that the automatic maneuvering control has ended is stored in the storage unit 81 as the end position Lf (step #22). The end position Lf is used as work travel position information WP through which the start position calculation unit 76D calculates the start position Ls2 of the next work travel. Note that of the end positions Lf illustrated in FIG. 8 to FIG. 11, the end position Lf of the target travel route LM[n] is also indicated as the work travel position information WP for calculating the start position Ls2 of the next work travel. The present specification assumes that the start position Ls2 will be calculated thereafter by the start position calculation unit 76D, and is therefore described as being distinct from the start position Ls.

Information pertaining to the previous turning travel is stored in the storage unit 81. The start position calculation unit 76D is configured to be capable of determining whether the previous turning travel was a right turn or a left turn by reading out data pertaining to the turning travel from the storage unit 81. As illustrated in FIG. 4, when the machine body 1 repeats the automatic maneuvering control along the target heading LA, the turning travel at the ridges of the field typically alternates between a right turn and a left turn. As such, the start position calculation unit 76D determines whether the previous turning travel was a right turn or a left turn (step #23). Note that the configuration may be such that the determination in step #23 is performed by a module aside from the start position calculation unit 76D. When the previous turning travel was a right turn (step #23: right turn), the start position calculation unit 76D calculates the next start position Ls2 on a left turn side on the basis of the previous turning travel, before the machine body 1 starts the turn (step #25-1). Guidance information for a left turn is then displayed in the display unit 4 (step #25-2), and a display line L2 based on the start position Ls2 is also displayed in the guidance information. On the other hand, when the previous turning travel was a left turn (step #23: left turn), the start position calculation unit 76D calculates the next start position Ls2 on a right turn side on the basis of the previous turning travel, before the machine body 1 starts the turn (step #24-1). Guidance information for a right turn is then displayed in the display unit 4 (step #24-2), and a display line L2 based on the start position Ls2 is also displayed in the guidance information.

In this manner, when the end determination unit 76E determines that the work travel has ended, the start position calculation unit 76D calculates the start position Ls2 on the right or the left of the travel direction of the machine body 1 in the work travel on the basis of the work travel position information WP serving as position information, and the display unit 4 displays guidance information for guiding the turning travel to the start position Ls2. At this time, when the start position Ls has been calculated in one of the left- or right-side turn directions with respect to the travel direction in the previous turning travel, the start position calculation unit 76D calculates the start position Ls2 in the other of the left- or right-side turn directions relative to the travel direction in the current turning travel, and the display unit 4 displays the display line L2, based on the start position Ls2, further on the other of the left and right sides than the machine body 1 in the map screen.

After the guidance information has been displayed in the display unit 4 through the process of step #24-2 or step #25-2, the occupant turns the machine body 1 by operating the steering wheel 16. The control device 75 is configured so that the turn direction at this time can be determined by the steering angle sensor 60 serving as a maneuvering operation detection means (step #24-3, step#25-3). Note that the means for determining the turn direction is not limited to a determination made by the steering angle sensor 60, and may be, for example, a determination based on an aggregation of the position information of the machine body 1 measured by the satellite positioning unit 8a, a determination based on the heading information of the machine body 1 measured by the inertial measurement unit 8b, or the like. In other words, the maneuvering operation detection means may be a configuration in which the maneuvering operations is detected by, for example, the satellite positioning unit 8a or the inertial measurement unit 8b detecting a turn.

If the actual turn direction of the machine body 1 differs from the guidance information displayed in the display unit 4, the guidance information displayed in the display unit 4 is changed to guidance information which corresponds to the actual turn direction of the machine body 1. When the actual turn direction of the machine body 1 is a left turn (step#24-3: left turn) in a state where guidance information for a right turn is displayed in the display unit 4 (step #24-2), the start position calculation unit 76D calculates the next start position Ls2 on the left turn side (step #24-4). Then, the guidance information in the display unit 4 is changed to guidance information for a left turn (step #24-5). On the other hand, when the actual turn direction of the machine body 1 is a right turn (step#25-3: right turn) in a state where guidance information for a left turn is displayed in the display unit 4 (step #25-2), the start position calculation unit 76D calculates the next start position Ls2 on the right turn side (step #25-4). Then, the guidance information in the display unit 4 is changed to guidance information for a right turn (step #25-5). In this manner, when, in turning travel, the steering wheel 16 (the maneuvering tool) is operated in the turn direction to the side opposite from the side on which the start position calculation unit 76D has calculated the start position Ls2, the start position calculation unit 76D re-calculates the start position Ls2 in the turn direction on the side toward which the steering wheel 16 has been operated, and the display unit 4 re-displays the start position Ls2 in the map screen, further than the machine body 1 toward the side corresponding to the turn direction in which the steering wheel 16 has been operated.

Before describing step #26 and on, a method by which the start position calculation unit 76D calculates the start position Ls2 will be described. In the embodiment illustrated in FIG. 8, after the automatic travel control is performed along the target travel route LM[n], the host vehicle position NM at the point in time when the end of the automatic maneuvering control was determined is stored in the storage unit 81 as the end position Lf of the target travel route LM[n] (the work travel position information WP) on the basis of step #22 in FIG. 7. Before the automatic maneuvering control in the target travel route LM[n], a left turn is made from the end position Lf of the target travel route LM[n-1] to the start position Ls of the target travel route LM[n]. Accordingly, a right turn is determined in step #23 of FIG. 7 before the machine body 1 turns from the end position Lf of the target travel route LM[n], i.e., the work travel position information WP.

In the embodiment illustrated in FIG. 8, the end position Lf of the target travel route LM[n-1] and the start position Ls of the target travel route LM[n] are separated by a first separation distance P1. An area of work travel based on the target travel route LM[n-1] and an area of work travel based on the target travel route LM[n] are areas which are adjacent to each other. Based on this, the first separation distance P1 is a distance equivalent to the work width of the tilling device 3 attached to the tractor via a PTO shaft, or a distance around ten percent smaller than the work width of the tilling device 3, for example. In FIG. 9 and FIG. 11 too, which will be described later, the first separation distance P1 is as described on the basis of FIG. 8. When the first separation distance P1 is a distance smaller than the work width of the tilling device 3, the work width of the work travel based on the target travel route LM[n-1] and the work width of the work travel based on the target travel route LM[n] overlap by a predetermined width (less than ten percent of the work width, for example).

The end position Lf of the target travel route LM[n-1] is a position where the previous turning travel was started. The start position Ls of the target travel route LM[n] is a position where the previous turning travel ended. Furthermore, the end position Lf of the target travel route LM[n-1] and the start position Ls of the target travel route LM[n] are separated by the first separation distance P1. Based on this, the start position calculation unit 76D estimates that the next automatic maneuvering control will be performed at a position separated from the target travel route LM[n] in the horizontal direction (a direction orthogonal to the target heading LA; the same applies hereinafter) by the first separation distance P1. The start position calculation unit 76D then calculates the start position Ls2 for new work travel on a side opposite to where the target travel route LM[n-1] is located, in the horizontal direction, with respect to the work travel position information WP, the start position Ls2 for new work travel being separated from the work travel position information WP by the first separation distance P1 (step #25-1). A target travel route LM[n+1] illustrated in FIG. 8 is a planned target travel route LM set after the machine body 1 has reached the start position Ls2.

Then, on the basis of the process of step #25-2, guidance information for the right turn indicated by 8-B in FIG. 8 is displayed in the display unit 4 as the map screen. In this manner, the display unit 4 displays the surroundings of the machine body 1, including the machine body 1, as the map screen. The work travel position information WP and the start position Ls2 of the next work travel are displayed in this map screen as linear display lines L1 and L2, respectively, which follow the target heading LA.

In this manner, the start position calculation unit 76D calculates the start position Ls2 on the basis of the separation distance between the position where the previous turning travel started and the position where the previous turning travel ended, and the display unit 4 displays the start position Ls2, calculated on the basis of the separation distance, in the guidance information.

As illustrated in FIG. 8 and FIG. 9, a machine body symbol SY and a turning route indicated by a broken line are schematically indicated in the map screen in the guidance information displayed in the display unit 4. While the machine body 1 is performing turning travel, the machine body symbol SY indicating the position of the machine body 1 moves along the turning route indicated by the broken line, as indicated in the guidance information for 8-B and 8-C in FIG. 9. Although the display unit 4 displays the turning route of the turning travel in the map screen, the turning route is not set in advance in the present embodiment, and the turning route indicated by the broken line is displayed in the map screen as a guide for reaching the start position Ls2. The machine body symbol SY is displayed as a guide in any desired location on the turning route indicated by the broken line, on the basis of the host vehicle position NM calculated by the travel trajectory obtainment unit 78. Additionally, the orientation of the machine body symbol SY changes in the map screen in the guidance information on the basis of a turning heading calculated by the heading deviation calculation unit 77 (see FIG. 3).

Descriptions of the flowchart in FIG. 7 will now be resumed. The distance calculation unit 76F (see FIG. 3) is configured to be capable of calculating the separation distance between the position information stored in the storage unit 81 and the position information based on the current position of the machine body 1. While the machine body 1 is performing turning travel, the separation distance between the work travel position information WP and the host vehicle position NM is calculated by the distance calculation unit 76F as time passes (step #26). In other words, the distance calculation unit 76F calculates the separation distance using the position information from the point in time when the end determination unit 76E (see FIG. 3) determines that the work travel has ended. The distance calculation unit 76F starts calculating the separation distance after the turning travel has started. Then, as indicated in the guidance information indicated by 8-B and 8-C in FIG. 9, a separation distance display DF, which is a distance of a component of the separation distance which is orthogonal to the target heading LA, is displayed in the display unit 4 (step #27). In this manner, when the end determination unit 76E determines that the work travel has ended, the distance calculation unit 76F calculates the separation distance using, as the position information stored in the storage unit 81, the work travel position information WP, which is position information based on the work travel determined by the end determination unit 76E to have ended. Furthermore, the display unit 4 is configured to be capable of displaying the work travel position information WP and the separation distance display DF. The display unit 4 starts displaying the separation distance after the turning travel has started.

While the machine body 1 is performing the turning travel, the control device 75 determines, on the basis of the position information of the machine body 1 measured by the satellite positioning unit 8a, whether or not the machine body 1 is turning to move further in the horizontal direction than the start position Ls2 of the next work travel (step #28). FIG. 9 illustrates a state in which, in the turning travel, the machine body 1 travels a distance greater than the first separation distance P1 from the work travel position information WP in the horizontal direction, and passes the start position Ls2 of the next work travel (indicated as a planned start position Ls2' in FIG. 9). Although the planned start position Ls2' indicated in FIG. 9 was the start position Ls2 of the next work travel that was originally set, the planned start position Ls2' is not used as the start position Ls2 of the next work travel. In this case, a determination of Yes is made in step #28 of FIG. 7. When a determination of Yes is made in step #28, the start position calculation unit 76D calculates the start position Ls2 of a new work travel at a position separated from the planned start position Ls2' by the first separation distance P1 in the horizontal direction, on the side opposite from the side of the location of the work travel position information WP (step #29). A target travel route LM[n+2] illustrated in FIG. 9 is a planned target travel route LM set after the machine body 1 has reached the start position Ls2.

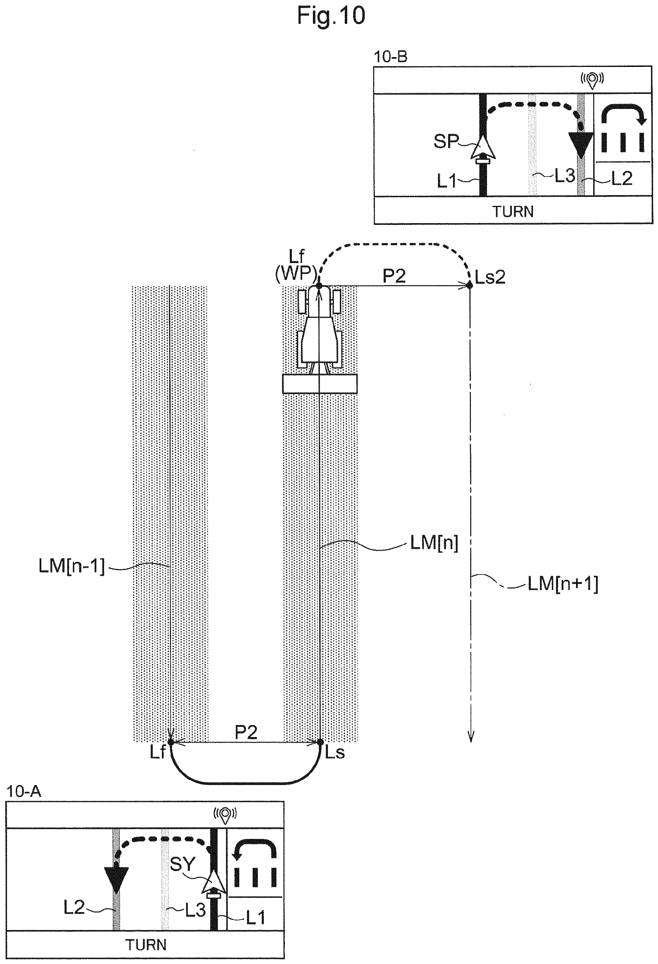

A second separation distance P2, which is a separation distance between the work travel position information WP and the start position Ls2 of the new work travel, is indicated in FIG. 9. The second separation distance P2 is double the distance of the first separation distance P1. Based on this, an unworked part having a width equivalent to the work width of the tilling device 3 in the horizontal direction remains between the area of the work travel based on the target travel route LM[n] and the area of the work travel to be performed on the basis of the start position Ls2 of the new work travel. The width of the unworked part is a width over which tilling work can be performed between already-worked parts on both sides, without gaps, when performing the tilling work. In FIG. 10 and FIG. 11 too, which will be described later, the second separation distance P2 is as described on the basis of FIG. 9.

Additionally, when the start position calculation unit 76D has calculated the start position Ls2 of the new work travel, the guidance information for a right turn, indicated by 8-C in FIG. 9, is displayed in the display unit 4 as a map screen, on the basis of the process of step #30. The work travel position information WP, the planned start position Ls2', and the start position Ls2 of the new work travel are displayed in the map screen indicated by 8-C as linear display lines L1, L2', and L2, respectively, which follow the target heading LA. The display line L2' based on the planned start position Ls2' is located between the display line L1 based on the work travel position information WP and the display line L2' based on the start position Ls2 of the new work travel. Then, a turning route indicated by a broken line is displayed from the display line L1 based on the work travel position information WP to the display line L2' based on the start position Ls2 of the new work travel, as a guide for reaching the start position Ls2 of the new work travel. The display of the machine body symbol SY and the display of the separation distance display DF in the guidance information indicated by 8-C in FIG. 9 are as already described on the basis of the guidance information indicated by 8-B in the same drawing.

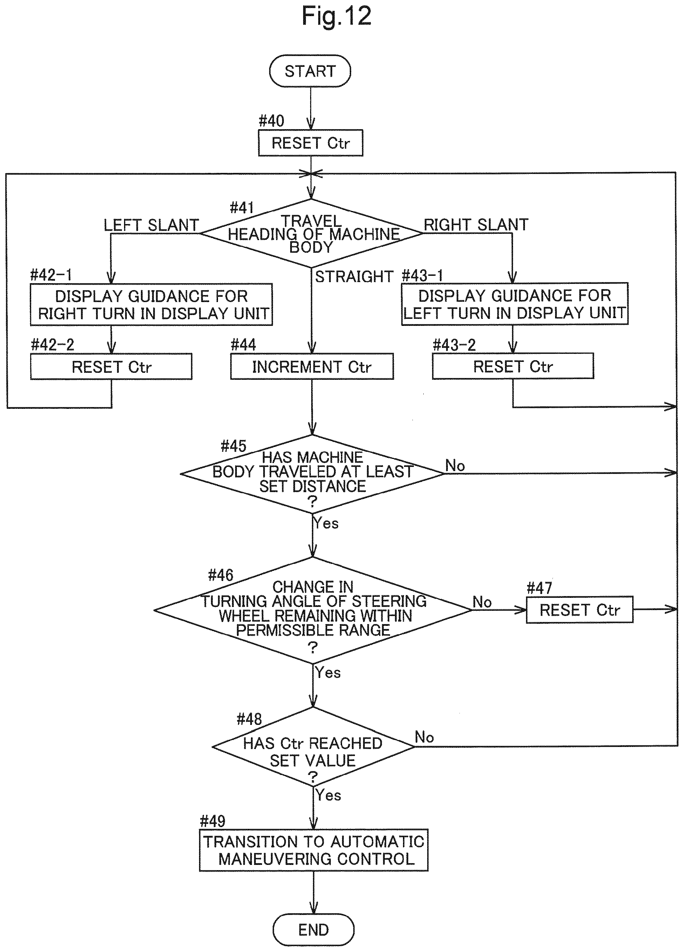

While the machine body 1 is performing turning travel, it is determined whether or not the heading deviation, calculated by the heading deviation calculation unit 77 (see FIG. 3), between the turning heading of the machine body 1 and the target heading LA is within a pre-set permissible range (step #31). If the heading deviation is outside the permissible range (step #31: No), the determination process of step #28, and the processes of step #29 and step #30 performed when a determination of Yes is made in step #28, are repeated. When the heading deviation is within the permissible range (step #31: Yes), the distance between the work travel position information WP and the start position Ls2 of the next work travel is stored in the storage unit 81 (see FIG. 3) (step #32), and the processing moves to the flowchart illustrated in FIG. 12, which will be described later. Additionally, after the turning travel has ended, the display unit 4 ends the display of the separation distance display DF.

In the determination in step #31, whether or not a distance, in the horizontal direction, between the work travel position information WP and the host vehicle positions NM calculated by the travel trajectory obtainment unit 78 is within the range of a reference distance that takes the work width of the work travel as a reference may be added as a determination item. In this case, aside from the work width of the work travel, a value which is an integral multiple of the work width may be used as the reference distance, or a value obtained by subtracting the aforementioned overlap amount from the value which is an integral multiple of the work width may be used as the reference distance.

Additionally, the distance recorded in the storage unit 81 in step #32 may be the actual distance between the work travel position information WP and the start position Ls2 of the next work travel, or may be a distance, among distances which are integral multiples of the reference distance which takes the work width of the work travel as a reference, that is close to the actual distance. In this manner, the distance stored in the storage unit 81 is, for example, the first separation distance P1, the second separation distance P2, or the like.

When the turning travel has been performed in such a manner that an unworked part having a width equivalent to the work width of the tilling device 3 in the horizontal direction remains between the work travel position information WP and the start position Ls2 of the next work travel (see FIG. 9), guidance information such as that illustrated in FIG. 10 is displayed in the display unit 4 in the turning travel performed thereafter. The target travel route LM[n-1] in FIG. 10 may be thought of as being the same as the target travel route LM[n+2] set after the machine body 1 reaches the start position Ls2 in FIG. 9.

In FIG. 10, before the automatic maneuvering control in the target travel route LM[n], a left turn is made across the end position Lf of the target travel route LM[n-1] and the start position Ls of the target travel route LM[n]. The guidance information for a left turn, indicated by 10-Ain FIG. 10 and FIG. 11, is displayed in the display unit 4 after automatic travel control along the target travel route LM[n-1] has been performed. The guidance information for a right turn, indicated by 10-B in FIG. 10 and FIG. 11, is displayed in the display unit 4 on the basis of the process of step #24-2 indicated in FIG. 7, after the automatic travel control has been performed along the target travel route LM[n] and before the machine body 1 actually starts the turn. A map screen showing the machine body 1 and the surroundings of the machine body 1 is included in this guidance information. Additionally, although this guidance information is displayed in the side panel 21 illustrated in FIG. 2, the guidance information may be displayed in the meter panel 20 illustrated in the same drawing.

The end position Lf of the target travel route LM[n-1] and the start position Ls of the target travel route LM[n] are separated by the second separation distance P2, and the second separation distance P2 has a distance of double (or substantially double but less than double) the work width of the tilling device 3. Based on this, in FIG. 10, an unworked part having a width equivalent to the work width of the tilling device 3 in the horizontal direction remains between the area of the work travel based on the target travel route LM[n-1] and the area of the work travel based on the target travel route LM[n], When tilling work is performed in this unworked part, the tilling work is performed, without gaps, between the area of the work travel based on the target travel route LM[n-1] and the area of the work travel based on the target travel route LM[n],

In the embodiment illustrated in FIG. 10, in the previous turning travel, the end position Lf of the target travel route LM[n-1] and the start position Ls of the target travel route LM[n] are separated by the second separation distance P2. Based on this, the start position calculation unit 76D estimates that the next automatic maneuvering control will be performed at a position separated from the target travel route LM[n] in the horizontal direction by the second separation distance P2. The start position calculation unit 76D then calculates the start position Ls2 for the next work travel at a position which is in the horizontal direction to the side opposite from the side on which the target travel route LM[n-1] is located, and which is separated from the work travel position information WP by the second separation distance P2. The target travel route LM[n+1] illustrated in FIG. 10 is a planned target travel route LM set after the machine body 1 has reached the start position Ls2.

The display line L1 based on the work travel position information WP and the display line L2' based on the start position Ls2 of the next work travel are displayed in the guidance information indicated by 10-B in FIG. 10 and FIG. 11. In the embodiment illustrated in FIG. 10, an unworked part having a width equivalent to the work width of the tilling device 3 in the horizontal direction remains between the work travel position information WP and the start position Ls2 of the next work travel. As such, a display line L3 indicating the unworked part is displayed between the display line L1 based on the work travel position information WP and the display line L2 based on the start position Ls2 of the next work travel. Note that the width of the unworked part is a width over which tilling work can be performed between already-worked parts on both sides, without gaps, when performing the tilling work.

As described above, the guidance information for a right turn, indicated by 10-B in FIG. 10 and FIG. 11, is displayed in the display unit 4 on the basis of the process of step #24-2 indicated in FIG. 7, after the automatic travel control has been performed along the target travel route LM[n] and before the machine body 1 actually starts the turn. However, when, for example, the target travel route LM[n] is approaching a ridge, on one side of the field, that follows the target heading LA, it is conceivable that the machine body 1 cannot actually turn any further to the right from the work travel position information WP. If the machine body 1 has actually turned to the left as indicated in FIG. 11, a left turn is determined in step #24-3 of FIG. 7, and the guidance information is changed to left turn guidance information, indicated by 10-C in FIG. 11, on the basis of the process of step #24-5. The start position Ls2 indicated in FIG. 10 is indicated as the planned start position Ls2' in FIG. 11, and the planned start position Ls2' is not used as the start position Ls2 for generating the next target travel route LM.

In step #24-4 indicated in FIG. 7, the start position calculation unit 76D calculates the start position Ls2 for generating the next target travel route LM on the basis of the previous turning travel. Thus as a rule, the start position calculation unit 76D calculates the start position Ls2 for generating the next target travel route LM at a position separated from the work travel position information WP by the second separation distance P2. However, in FIG. 11, the area of the work travel based on the target travel route LM[n-1] has already undergone work travel. Accordingly, if, when the machine body 1 makes a left turn, the start position Ls2 has been calculated at a position separated from the work travel position information WP by the second separation distance P2, the area that has already undergone work travel will overlap with the start position Ls2 of the next work travel. To avoid this problem, the start position calculation unit 76D searches for the start position Ls2 with priority given to unworked parts in areas on the left turn side. In the embodiment illustrated in FIG. 11, an unworked part remains between the area of the work travel based on the target travel route LM[n-1] and the area of the work travel based on the target travel route LM[n], as described earlier on the basis of FIG. 10. The width of this unworked part in the horizontal direction is equivalent to the work width of the tilling device 3. As such, instead of the planned start position Ls2' indicated in FIG. 11, the start position calculation unit 76D calculates the start position Ls2 for generating the next target travel route LM at a position separated from the work travel position information WP by the first separation distance P1. The target travel route LM[n+2] illustrated in FIG. 11 is a planned target travel route LM set after the machine body 1 has reached the start position Ls2.

### Display of Guidance Information before Start of Automatic Maneuvering Control

After the above-described turning travel is complete, the manual maneuvering mode of the control device 75 is continued, and straight travel is continued on the basis of human operation. During this period, the control device 75 confirms the determination conditions for heading deviation of the machine body 1 relative to the target heading LA, the direction of the front wheels 11, and the steering state of the steering wheel 16, and determines whether or not the state is one in which the mode can switch to the automatic maneuvering mode. Then, if the state is one in which the control device 75 can switch to the automatic maneuvering mode, the automatic maneuvering control is started in response to the occupant operating the trigger switch 49. Here, the occupant can, using the display unit 4, visually confirm whether or not the state is one in which the control device 75 can switch to the automatic maneuvering mode. At the same time, guidance information that assists the occupant in making the maneuvering operations is displayed in the display unit 4.

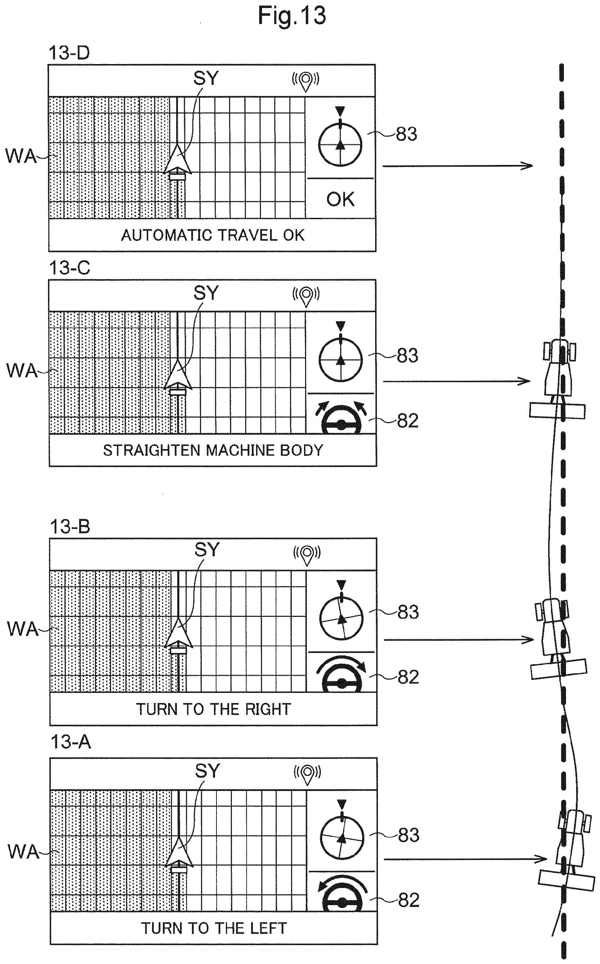

While the straight travel of the working machine based on human operations is continuing, a screen for the guidance information indicated by 13-A to 13-D in FIG. 13 is displayed in the display unit 4. A map screen showing the machine body 1 and the surroundings of the machine body 1 is included in this guidance information. This guidance information is displayed in the side panel 21 illustrated in FIG. 2, but may be displayed in the meter panel 20 displayed in the same drawing. A steering display 82 of the steering wheel 16, and a heading deviation display 83 of the machine body 1 calculated by the heading deviation calculation unit 77 are displayed in a vertical arrangement at the right end of the guidance information screen. Additionally, a map screen including the machine body symbol SY is displayed in the screen to the left of the steering display 82 and the heading deviation display 83, and in this map screen, already-worked parts, for which the tilling work is already complete, are indicated by a color indication WA. The color indication WA is calculated from the aggregation of the host vehicle positions NM stored in the storage unit 81 and the work width of the tilling device 3. This makes a clear visual distinction between already-worked parts and unworked parts. The configuration may be such that of the areas in which the color indication WAis displayed, areas that have undergone work travel three or more times, areas that have undergone work travel twice, and areas that have only undergone work travel once are distinguished by different colors. In other words, the configuration may be such that the color indication WA is a different color depending on the number of times work travel has been performed, and the already-worked parts in the guidance information are displayed using color indications WA of different colors. The color indication WA may instead be point-based indications or pattern-based indications.

The determination to start the automatic maneuvering control is made on the basis of the flowchart illustrated in FIG. 12. The control device 75 is configured to use a determination counter Ctr to determine whether or not the state is one in which the control device 75 can switch to the automatic maneuvering mode. The value of the counter Ctr immediately after the turning travel has ended is set to zero (step #40). First, it is determined whether or not the heading deviation of the machine body 1 is within a permissible range with respect to the target heading LA (step #41). If the heading of the machine body 1 is slanted to the right relative to the target heading LA (step #41: right slant), guidance information for a left turn, indicated by 13-A in FIG. 13, is displayed in the display unit 4 (step #43-1). The value of the counter Ctr is then reset to zero (step #43-2). Information prompting the occupant to turn the steering wheel 16 to the left is displayed in the guidance information for a left turn indicated by 13-A in FIG. 13. If the heading of the machine body 1 is slanted to the left relative to the target heading LA (step #41: left slant), guidance information for a right turn, indicated by 13-B in FIG. 13, is displayed in the display unit 4 (step #42-1). The value of the counter Ctr is then reset to zero (step #42-2). Information prompting the occupant to turn the steering wheel 16 to the right is displayed in the guidance information for a right turn indicated by 13-B in FIG. 13.

While the machine body 1 is traveling straight in a direction following the target heading LA (step #41: straight), the counter Ctr is incremented (step #44), and the value of the counter Ctr increases. It is then determined whether or not the machine body 1 has traveled at least a set distance (step #45). Here, the "set distance" may be a pre-set distance from the start position Ls2 (see FIG. 8 to FIG. 11), or may be a pre-set distance from a state in which the machine body 1 travels straight in a direction following the target heading LA. If the machine body 1 has not traveled at least the set distance (step #45: No), the processing returns to step #41.

If the machine body 1 has traveled at least the set distance (step #45: Yes), it is determined whether a change in the turning angle of the steering wheel 16 remains within a permissible range (step #46). A state in which the steering wheel 16 is moved neither in the direction of a right turn nor in the direction of a left turn, and the directions of the front wheels 11 and the rear wheels 12 are parallel, can be given as an example of a turning angle of the steering wheel 16 for when automatic maneuvering control is permitted, but the state is not limited thereto. For example, if the travel area of the machine body 1 is a ground surface that slopes in the horizontal direction, there is a risk that if the machine body 1 simply continues traveling straight, the machine body 1 will gradually shift toward the lower ground in the left-right direction. In such a case, the direction of the front wheels 11 is kept steered toward the high ground in the left-right direction, and as a result, it is easier for the machine body 1 to advance along the target heading LA. Accordingly, the turning angle of the steering wheel 16 when the automatic maneuvering control is permitted also includes states in which the steering wheel 16 is steered in the directions of a right turn or a left turn, for example. In other words, the control device 75 is configured so that the automatic maneuvering control is permitted when the turning angle of the steering wheel 16 continues to be kept within a set range. If the change in the turning angle of the steering wheel 16 is not kept within the permissible range (step #46: No), the counter Ctr is reset to zero (step #47). Note that the configuration may be such that in the process of step #47, the value of the counter Ctr may be decremented to reduce the value of the counter Ctr rather than resetting the value of the counter Ctr to zero.

The guidance information indicated by 13-C in FIG. 13 is displayed in the display unit 4 from when the straight travel is determined in step #41 to when the determination of step #46 is made. Then, when the counter Ctr has reached a pre-set value (step #48: Yes), the guidance information indicated by 13-D in FIG. 13 is displayed in the display unit 4, and the automatic maneuvering control is permitted. Then, the control mode of the control device 75 is switched from the manual maneuvering mode to the automatic maneuvering mode in response to the occupant operating the trigger switch 49, and the automatic maneuvering control is executed (step #49). The configuration may be such that if a sharp turn of the steering wheel 16 is detected after a determination of Yes is made in step #48 but before the occupant operates the trigger switch 49, the value of the counter Ctr is reset to zero, decremented, or the like.

### Other Embodiments

The present invention is not limited to the configuration described as an example in the foregoing embodiment, and examples of other representative embodiments of the present invention will be given hereinafter.
(1) In the foregoing embodiment, the target heading calculation unit 76B is configured to be capable of setting the end position Tf through an operation of the trigger switch 49 after the start position Ts has been set by the trigger switch 49 being operated and after the machine body 1 has traveled a pre-set distance following the setting of the start position Ts, but the configuration is not limited to this embodiment. For example, the configuration may be such that a travel trajectory is first obtained by the occupant causing the machine body 1 to travel for at least a set distance set in advance, and the occupant then sets the start position Ts and the end position Tf of the obtained travel trajectory. In other words, the trigger switch 49, which is a single operating tool, may be configured to be capable of setting both the start position Ts and the end position Tf of the travel trajectory obtained when calculating the target heading LA.
(2) In the foregoing embodiment, when the end position Tf can be set by operating the trigger switch 49, the display unit 4 displays an indication that the end position Tf can be set, but the configuration is not limited to this embodiment. For example, a notification indicating that the end position Tf will be able to be set may be displayed in the display unit 4 before the end position Tf can be set by operating the trigger switch 49. This notification display may be, for example, a distance, a time, or the like until the end position Tf can be set.
(3) In the foregoing embodiment, when, after the start position Ts has been set by operating the trigger switch 49, the change amount in the maneuvering operations is detected as having exceeded a pre-set range without the trigger switch 49 being operated, the setting of the start position Ts is canceled, but the configuration is not limited to this embodiment. For example, the configuration may be such that when a travel trajectory is first obtained by the occupant causing the machine body 1 to travel for at least a set distance set in advance, the occupant then selects an area of the travel trajectory excluding turning areas. In this case, the target heading LA is calculated on the basis of the travel trajectory excluding the turning areas.
(4) In the foregoing embodiment, the maneuvering operations are performed by changing the direction of the front wheels 11, but the configuration may be such that the maneuvering operations are performed by changing the direction of the rear wheels 12. In sum, the maneuvering control unit 80 may have any configuration that enables maneuvering control of the travel apparatus along the target heading LA.
(5) The satellite positioning unit 8a is provided in the machine body 1, which is the subject of the positioning, as the above-described position detection unit 8, but the configuration is not limited to one in which a positioning signal is received directly from a satellite positioning system. For example, the configuration may be such that base stations that receive positioning signals from satellites are provided in a plurality of locations around the work vehicle, and the position information of the traveling work machine is identified through network communication processing with the plurality of base stations. In sum, the position detection unit 8 may have any configuration capable of detecting the position information of the machine body 1 on the basis of a positioning signal from a navigation satellite.
(6) In the foregoing embodiment, the travel trajectory obtainment unit 78 calculates the host vehicle position NM on the basis of the positioning signal measured by the satellite positioning unit 8a, the heading of the machine body 1 calculated by the heading deviation calculation unit 77, and the vehicle speed detected by the vehicle speed sensor 62, but the configuration is not limited to this embodiment. The travel trajectory obtainment unit 78 may be configured to calculate the host vehicle position NM and obtain the travel trajectory on the basis of the positioning signal or the heading and vehicle speed of the machine body 1 (or a combination of these two). In sum, the travel trajectory obtainment unit 78 may have any configuration capable of obtaining the travel trajectory of the machine body 1 on the basis of the detection, over time, of position information.
(7) In the foregoing embodiment, the trigger switch 49 serving as an operating tool is the dial switch 23, but the trigger switch 49 may be a pumper lever (not shown) for operating the tilling device 3, a PTO clutch (not shown), or the like, for example.
(8) Although the target travel routes LM1 to LM6 illustrated as examples in FIG. 4 are formed having linear shapes, the target travel routes LM1 to LM6 may have curved shapes instead, for example. In this case, the configuration may be such that the travel trajectory used when generating the reference route is formed having a curved shape, and the target heading LA changes gradually with progress along the curved shape.
(9) In the foregoing embodiment, the steering wheel 16 is described as the maneuvering tool, but the maneuvering tool may be a swinging lever, a pair of buttons, or the like, for example.
(10) Although a tractor is described as an example of the traveling work machine according to the present invention, in addition to a tractor, the present invention can also be applied in harvesters, rice transplanters, seeding machines, and the like.

### Industrial Applicability

The present invention can be applied in traveling work machines in which a target heading can be calculated on the basis of a travel trajectory and maneuvering of a machine body can be controlled to follow the target heading.

### Description of Reference Signs

- 1: Machine body
- 4: Display unit
- 8: Position detection unit
- 8a: Satellite positioning unit (position detection unit)
- 11: Front wheels (travel apparatus)
- 12: Rear wheels (travel apparatus)
- 15: Occupancy part
- 16: Steering wheel (maneuvering tool)
- 22: Wheel support part (support member)
- 23: Dial switch (operating tool)
- 49: Trigger switch (operating tool)
- 60: Steering angle sensor (maneuvering operation detection means)
- 76B: Target heading calculation unit
- 78: Travel trajectory obtainment unit
- 80: Maneuvering control unit
- LA: Target heading
- Ts: Start position (start point)
- Tf: End position (end point)

## Claims

1. A traveling work machine comprising:
a machine body (1) provided with a travel apparatus (11, 12);
a position detection unit (8) configured to detect position information of the machine body (1) on the basis of a positioning signal of a navigation satellite;
a travel trajectory obtainment unit (78) configured to obtain a travel trajectory of the machine body (1) on the basis of detection, over time, of the position information;
a target heading calculation unit (76B) configured to calculate a target heading (LA) on the basis of the travel trajectory;
a maneuvering control unit (80) configured to control the travel apparatus (11, 12) to maneuver along the target heading (LA);
a display unit (4) configured to display information pertaining to setting of the target heading (LA); and
a single operating tool (23, 49) configured to set both a start point (Ts) and an end point (Tf) of the travel trajectory obtained when calculating the target heading (LA),
**characterized in that**:
the target heading calculation unit (76B) is configured to set the end point (Tf) through an operation of the operating tool (23, 49) after the start point (Ts) has been set through an operation of the operating tool (23, 49) and the machine body (1) has traveled a pre-set distance after the start point (Ts) has been set; and
when setting of the end point (Tf) through an operation of the operating tool (23, 49) has become possible, the display unit (4) is configured to display an indication that the setting of the end point (Tf) is possible.

2. The traveling work machine according to claim 1,
wherein the target heading calculation unit (76B) is configured to set the start point (Ts) through an operation of the operating tool (23, 49) when an accuracy at which the position detection unit (8) obtains the position information is at least a pre-set accuracy.

3. The traveling work machine according to claim 1 or 2, comprising:
a maneuvering operation detection means (60) that is configured to detect a maneuvering operation of the travel apparatus (11, 12),
wherein when, after the start point (Ts) has been set through an operation of the operating tool (23, 49), a change amount of the maneuvering operation is detected as exceeding a pre-set range without the operating tool (23, 49) being operated, the setting of the start point (Ts) is canceled.

4. The traveling work machine according to any one of claims 1 to 3, comprising:
a cabin part (15) configured to be occupied by an occupant; and
a maneuvering tool (16) which is supported by a support member in the cabin part and which is configured to perform a maneuvering operation of the travel apparatus (11, 12),
wherein the operating tool (23, 49) is disposed above the support member (22) and directly below the maneuvering tool (16).

## Patentansprüche

1. Fahrende Arbeitsmaschine, umfassend:
einen Maschinenkörper (1), der mit einer Fahreinrichtung (11, 12) versehen ist;
eine Positionserfassungseinheit (8), die derart konfiguriert ist, dass sie Positionsinformationen des Maschinenkörpers (1) anhand eines Positionssignals eines Navigationssatelliten erfasst;
eine Fahrbahn-Erhaltungseinheit (78), die derart konfiguriert ist, dass sie eine Fahrbahn des Maschinenkörpers (1) anhand der Erfassung der Positionsinformationen im Laufe der Zeit erhält;
eine Zielkurs-Berechnungseinheit (76B), die derart konfiguriert ist, dass sie einen Zielkurs (LA) anhand der Fahrbahn berechnet;
eine Manövriersteuereinheit (80), die derart konfiguriert ist, dass sie die Fahreinrichtung (11, 12) so steuert, dass sie entlang des Zielkurses (LA) manövriert;
eine Anzeigeeinheit (4), die derart konfiguriert ist, dass sie Informationen anzeigt, die das Einstellen des Zielkurses (LA) betreffen; und
ein einzelnes Betätigungswerkzeug (23, 49), das derart konfiguriert ist, dass es sowohl einen Startpunkt (Ts) als auch einen Endpunkt (Tf) der Fahrbahn einstellt, die erhalten werden, wenn der Zielkurs (LA) berechnet wird,
**dadurch gekennzeichnet, dass**:
die Zielkurs-Berechnungseinheit (76B) derart konfiguriert ist, dass sie den Endpunkt (Tf) durch eine Betätigung des Betätigungswerkzeugs (23, 49) einstellt, nachdem der Startpunkt (Ts) durch eine Betätigung des Betätigungswerkzeugs (23, 49) eingestellt wurde und der Maschinenkörper (1) eine voreingestellte Entfernung gefahren ist, nachdem der Startpunkt (Ts) eingestellt wurde; und
wenn das Einstellen des Endpunkts (Tf) durch eine Betätigung des Betätigungswerkzeugs (23, 49) möglich geworden ist, die Anzeigeeinheit (4) derart konfiguriert ist, dass sie eine Anzeige anzeigt, dass das Einstellen des Endpunkts (Tf) möglich ist.

2. Fahrende Arbeitsmaschine nach Anspruch 1,
wobei die Zielkurs-Berechnungseinheit (76B) derart konfiguriert ist, dass sie den Startpunkt (Ts) durch eine Betätigung des Betätigungswerkzeugs (23, 49) einstellt, wenn eine Genauigkeit, mit der die Positionserfassungseinheit (8) die Positionsinformationen erhält, mindestens einer voreingestellten Genauigkeit entspricht.

3. Fahrende Arbeitsmaschine nach Anspruch 1 oder 2, umfassend:
ein Manövrierbetrieb-Erfassungsmittel (60), das derart konfiguriert ist, dass es eine Manövrierbetätigung der Fahreinrichtung (11, 12) erfasst,
wobei, wenn, nachdem der Startpunkt (Ts) durch eine Betätigung des Betätigungswerkzeugs (23, 49) eingestellt wurde, ein Änderungsbetrag der Manövrierbetätigung als einen voreingestellten Bereich überschreitend erfasst wird, ohne dass das Betätigungswerkzeug (23, 49) betätigt wird, das Einstellen des Startpunkts (Ts) abgebrochen wird.

4. Fahrende Arbeitsmaschine nach einem der Ansprüche 1 bis 3, umfassend:
ein Kabinenteil (15), das derart konfiguriert ist, dass es von einem Insassen besetzt werden kann; und
ein Manövrierwerkzeug (16), das von einem Stützelement im Kabinenteil getragen wird und das derart konfiguriert ist, dass es eine Manövrierbetätigung der Fahreinrichtung (11, 12) durchführt,
wobei das Betätigungswerkzeug (23, 49) oberhalb des Stützelements (22) und direkt unterhalb des Manövrierwerkzeugs (16) angeordnet ist.

## Revendications

1. Machine de travail mobile comprenant :
un corps de machine (1) doté d'un appareil de déplacement (11, 12)
une unité de détection de position (8) configurée pour détecter des informations de position du corps de machine (1) sur la base d'un signal de positionnement d'un satellite de navigation ;
une unité d'obtention de trajectoire de déplacement (78) configurée pour obtenir une trajectoire de déplacement du corps de machine (1) sur la base de la détection, dans le temps, des informations de position ;
une unité de calcul de direction cible (76B) configurée pour calculer une direction cible (LA) sur la base de la trajectoire de déplacement ;
une unité de commande de manoeuvre (80) configurée pour commander l'appareil de déplacement (11, 12) pour sa manoeuvre le long de la direction cible (LA) ;
une unité d'affichage (4) configurée pour afficher des informations concernant la définition de la direction cible (LA) ; et
un seul outil opérationnel (23, 49) configuré pour définir à la fois un point de départ (Ts) et un point de fin (Tf) de la trajectoire de déplacement obtenue lors du calcul de la direction cible (LA),
**caractérisée en ce que** :
l'unité de calcul de direction cible (76B) est configurée pour définir le point de fin (Tf) par le biais d'une opération de l'outil opérationnel (23, 49) après que le point de départ (Ts) a été défini par le biais d'une opération de l'outil opérationnel (23, 49) et le corps de machine (1) s'est déplacé sur une distance prédéfinie après que le point de départ (Ts) a été défini ; et
lorsque la définition du point de fin (Tf) par le biais d'une opération de l'outil opérationnel (23, 49) est devenue possible, l'unité d'affichage (4) est configurée pour afficher une indication selon laquelle la définition du point de fin (Tf) est possible.

2. Machine de travail mobile selon la revendication 1,
dans laquelle l'unité de calcul de direction cible (76B) est configurée pour définir le point de départ (Ts) par le biais d'une opération de l'outil opérationnel (23, 49) lorsqu'une précision selon laquelle l'unité de détection de position (8) obtient les informations de position est au moins une précision prédéfinie.

3. Machine de travail mobile selon la revendication 1 ou 2, comprenant :
un moyen de détection d'opération de manoeuvre (60) qui est configuré pour détecter une opération de manoeuvre de l'appareil de déplacement (11, 12),
dans laquelle lorsque, après que le point de départ (Ts) a été défini par le biais d'une opération de l'outil opérationnel (23, 49), une quantité de changement de l'opération de manoeuvre est détectée comme dépassant une plage prédéfinie sans que l'outil opérationnel (23, 49) ne soit utilisé, la définition du point de départ (Ts) est annulée.

4. Machine de travail mobile selon l'une quelconque des revendications 1 à 3, comprenant :
une partie cabine (15) configurée pour être occupée par un occupant ; et
un outil de manoeuvre (16) qui est supporté par un élément de support dans la partie cabine et qui est configuré pour réaliser une opération de manoeuvre de l'appareil de déplacement (11, 12),
dans laquelle l'outil opérationnel (23, 49) est disposé au-dessus de l'élément de support (22) et directement au-dessous de l'outil de manoeuvre (16).
